# EUROPÄISCHE PATENTSCHRIFT

(11) **EP 2 431 614 B1**
(45) Veröffentlichungstag und Bekanntmachung des Hinweises auf die Patenterteilung: **28.10.2015**
(21) Anmeldenummer: 11007000.0
(22) Anmeldetag: 27.08.2011
(51) Int. Cl.: F04D 19/04, F04D 29/051, F04D 29/058, F04D 29/059, F04D 29/057, F04D 27/00

(54) **Vakuumpumpe**
Vacuum pump
Pompe à vide

(30) Priorität: 16.09.2010 DE 102010045716
(43) Veröffentlichungstag der Anmeldung: 21.03.2012
(73) Patentinhaber: Pfeiffer Vacuum GmbH, 35614 Aßlar (DE)
(72) Erfinder: Vorwerk, Peter, 35630 Ehringshausen (DE)

(56) Entgegenhaltungen:
- EP-A1- 1 245 832
- EP-A2- 2 105 615
- DE-A1- 2 349 033
- DE-A1- 4 134 255
- FR-A1- 2 253 156
- JP-A- 2005 240 967
- JP-A- 2008 157 439
- US-A- 3 753 623

## Beschreibung

Die Erfindung betrifft eine Vakuumpumpe nach dem Oberbegriff des ersten Anspruchs und ein Verfahren nach dem Oberbegriff des zehnten Anspruchs.

Unter den Vakuumpumpen sind heute Molekular- und insbesondere Turbomolekularpumpen aus dem Stand der Technik nicht mehr wegzudenken, befriedigen sie doch in herausragender Form die Bedürfnisse bei der Vakuumerzeugung in verschiedensten Anwendungen. Aus diesen seien beispielhaft Gasanalyse, Halbleiterherstellung und Bauteilbeschichtung herausgegriffen. Die Pumpwirkung solcher Vakuumpumpen beruht auf der schnellen Bewegung von Oberflächen relativ zu einander, was in der Regel durch einen schnell drehenden Rotor gelöst wird. In einem bewährten Bauprinzip ist die Welle des Rotors an ihren beiden Enden nach einem hybriden Prinzip gelagert: das dem Hochvakuum zugewandte Lager ist permanentmagnetisch ausgeführt, das vorvakuumseitige Lager hingegen als Wälzlager.

Durch die thermische Ausdehnung des Rotors und/oder der Welle des Rotors verschieben sich die rotorseitigen Bauteile des Permanentmagnetlagers gegen die statorseitigen Bauteile. Wenn das Permanentmagnetlager auf dem Abstoßungsprinzip beruht, führt diese Verschiebung zu einer Kraft, die in der Folge auf das Wälzlager einwirkt. Diese Krafteinwirkung verringert letztlich die Lebensdauer des Wälzlagers.

Um dieses Problem zu lösen, schlägt der Stand der Technik vor, die Lagerpunkte statorseitig zu verschieben. Dies erfolgt einerseits nach der DE 28 25 551 mit einer aufwändigen aktiven Mechanik, andererseits passiv mit einer trägen und nur schwer dimensionier- und kontrollierbaren Gehäusestruktur wie in der DE 198 04 768.

Der Bauteilaufwand, Dimensionierungs- sowie Regelungs- und Trägheitsprobleme haben verhindert, dass diese Lösungen in Serienprodukten angewendet werden.

Weiter wird in der EP 1245832 A1 eine Sicherheitseinrichtung und ein Verfahren für eine Turbomolekularpumpe beschrieben. Anders als bei der vorliegenden Erfindung geht es bei der EP 1245832 A1 um einen Schutz vor abnormalen Betriebsphänomenen. Zum Schutz wird hier ein Abstandsensor integriert, der einen Versatz der Rotorwelle erfasst. Bei einem Versatz der Rotorwelle wird diese durch eine elektromagnetische Kraft in ihre vorherfestgelegte Position zurückverlagert.

Der Erfindung liegt die Aufgabe zu Grunde, eine Kraft, die durch normale Betriebsbedingungen auf die Rotorwelle wirkt wenigstens teilweise zu kompensieren, um so einem vorzeitigem Wälzlagerschaden vorzubeugen.

Diese Aufgabe wird gelöst durch eine Vakuumpumpe mit den Merkmalen des ersten Patentanspruchs und durch ein Verfahren mit den Merkmalen des zehnten Anspruchs. Die Ansprüche 2 bis 9 sowie 11 und 12 geben vorteilhafte Weiterbildungen an.

Während die Lösungen nach dem Stand der Technik vorsehen, mit aufwändigen Konstruktionen die Entstehung einer Kraft zu vermeiden, wird mit der Anordnung gemäß der Erfindung durch den Krafterzeuger die durch die thermische Ausdehnung der einen Teil des Rotors bildenden Welle entstehenden Last von dem Wälzlager wenigstens teilweise weggenommen. Diese verringerte Belastung führt direkt zu einer Erhöhung der Lebensdauer des Wälzlagers. Der größte Effekt wird erreicht, wenn die vom Krafterzeuger erzeugte Kraft dauerhaft in dem Zeitraum wirkt, in dem die Last, insbesondere der Spitzenwert der Last, auftritt. Eine noch deutlichere Erhöhung der Lebensdauer wird erreicht, wenn gemäß Betriebsverfahren eine Betriebsgröße bestimmt und abhängig von dieser die vom Krafterzeuger erzeugte Kraft eingestellt wird.

Eine kostengünstige und konstruktiv einfache Ausführung ist ein Krafterzeuger, welcher rotorseitig und statorseitig angeordnete Permanentmagneten umfasst. Zudem erlaubt diese Anordnung, ohne Zufuhr von Energie, beispielsweise im unbestromten Zustand, die Kraft zu erzeugen.

Die Weiterbildung nach Anspruch 2 hat den Vorteil, ohne zusätzlichen Regelaufwand auszukommen. Es werden nur wenig zusätzliche Teile benötigt, so dass eine kostengünstige Lösung entsteht.

Die Weiterbildung nach Anspruch 3 erhöht zwar den Aufwand, erreicht aber durch eine höhere Genauigkeit der eingeleiteten Kraft eine zusätzliche Verbesserung der Lebensdauer des Wälzlagers.

Eine vorteilhaft kostengünstige, aktive Anordnung stellt die Weiterbildung nach Anspruch 4 vor.

Eine technisch einfache Anpassung der Kraft mit geringem Elektronikaufwand aber sehr hoher Genauigkeit der Kraft stellt Anspruch 5 vor. Zudem sind die erreichbaren Kräfte höher als beim Einsatz von Permanentmagneten.

Die Weiterbildung nach Anspruch 6 erlaubt vorteilhaft, die Krafterzeugung in den ohnehin vorhandenen Schmiermittelkreislauf einzubinden. Dies bedeutet einen geringen Aufwand und Raumbedarf, da nur wenige Teile erforderlich sind.

Die Weiterbildung nach Anspruch 7 ist vorteilhaft, da ein Düsenblock als Teil des Krafterzeugers erlaubt, Krafterzeugung mit Sperrgaseinleitung zu verbinden.

Die Genauigkeit der Kraftstellung und damit den Einfluss auf die Lebensdauer des Wälzlagers wird durch den Anspruch 8 erhöht. Der besondere Vorteil eines Kraftsensors liegt in der sehr hohen Genauigkeit. Der Anspruch 8 erlaubt, Betriebsgrößen zu verwenden, deren Überwachung für den Benutzer der Vakuumpumpe auch aus anderen Gründen hilfreich ist, beispielsweise der Prozessüberwachung. In diesem Zusammenhang stehen die Ansprüche 11 und 12, die solche vorteilhaften Betriebsgrößen angeben.

Ein Krafterzeuger wirkt besonders gut mit einem Gegenstand nach den Merkmalen des Anspruches 9 zusammen, da hier besonders lange Wellen erforderlich sind und oftmals schwierige thermische Verhältnisse angetroffen werden.

Anhand von Ausführungsbeispielen soll die Erfindung näher erläutert und die Darstellung der Vorteile vertieft werden. Es zeigen:
- Fig. 1:: Darstellung der Kraftverhältnisse,
- Fig. 2:: Schnitt durch eine Turbomolekularvakuumpumpe mit permanentmagnetischem Krafterzeuger,
- Fig. 3:: Schnitt durch ein Permanentmagnetlager mit integriertem Krafterzeuger,
- Fig. 4:: Schnitt durch eine Turbomolekularvakuumpumpe mit mehreren Gaseinlässen und einem Krafterzeuger, der einen Elektromagneten umfasst,
- Fig. 5:: Schnitt durch eine Lageranordnung mit Kraftsensor und elektromagnetischem Krafterzeuger,
- Fig. 6:: Schnitt durch eine Anordnung mit hydraulischem Krafterzeuger,
- Fig. 7:: Schnitt durch eine Anordnung mit aerostatischem Krafterzeuger.

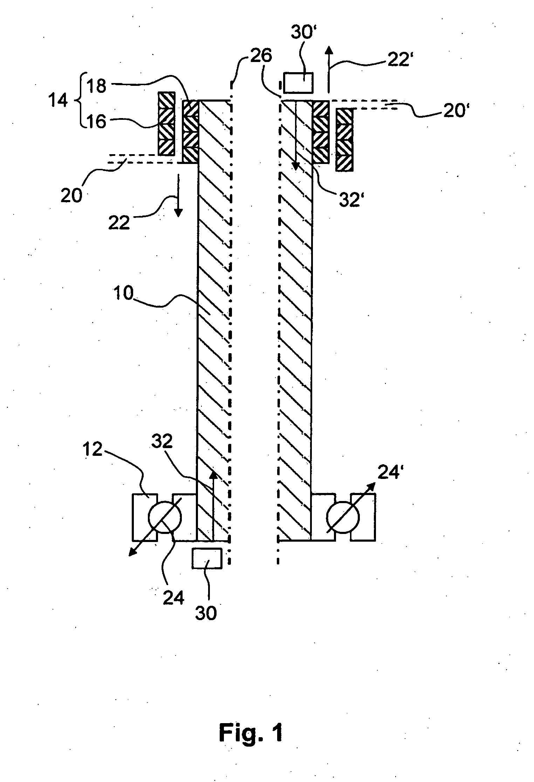

Es zeigt Fig. 1 zunächst schematisch den prinzipiellen Aufbau einer Anordnung mit einer zu einem Rotor gehörenden Welle 10, einem Wälzlager 12 und einem Permanentmagnetlager 14. Wälzlager und Permanentmagnetlager sind voneinander beabstandet an der Welle angeordnet. Das Permanentmagnetlager umfasst einen Lagerrotor 18 und einen Lagerstator 16, wobei sich letztere beiden Komponenten voneinander abstoßen. Durch die abstoßende Wirkung zwischen Lagerrotor und

Lagerstator entsteht bei einem Versatz in Axialrichtung 26 eine Kraft entlang der Welle, die in die Richtung des Versatzes gerichtet ist.

Das Wälzlager besitzt ein im Vergleich zum Versatz und zur thermischen Ausdehnung der Welle geringes Lagerspiel und stellt dadurch einen Fixpunkt dar. Das Wachsen beziehungsweise die Verschiebung der Welle relativ zum Gehäuse ist umso größer, je größer der Abstand zum Wälzlager ist.

Im linken Teil der Abbildung ist ein unterer Versatz 20 gegeben, bei dem sich der Lagerrotor näher als der Lagerstator am Wälzlager befindet. Hierdurch entsteht eine Druckkraft 22 in Richtung auf das Wälzlager. Bei diesem wiederum wird das Lagerspiel aufgezehrt und es stellt sich eine Druckkraftresultierende 24 ein.

Im rechten Teil der Abbildung ist ein oberer Versatz 20' dargestellt, bei dem der Lagerrotor axial weiter vom Wälzlager als der Lagerstator entfernt ist. Es entsteht eine Zugkraft 22', die dann im Wälzlager die Zugkraftresultierende 24' bewirkt.

Der Zustand mit einem Versatz von Null zwischen Lagerrotor und Lagerstator ist zum einen labil. Zum anderen bewirkt die Erwärmung bei Betrieb eine Längenzunahme der Welle, so dass Lagerrotor und Lagerstator gegeneinander verschoben werden. Die Anordnung wird daher immer so gestaltet, dass sowohl im Ruhezustand als auch im Betrieb entweder ein unterer Versatz oder ein oberer Versatz gehalten wird. Lediglich der Wert des Versatzes und damit der Wert der resultierenden Kraft ändern sich mit der Temperatur. Durch einen Krafterzeuger wird die im Permanentmagnetlager entstehende Druckkraft oder Zugkraft wenigstens teilweise durch eine Kraft oder die in Wellenrichtung liegende Vektorkomponente einer Kraft kompensiert, nämlich soweit, bis die Last für das Wälzlager verträglich ist. Für den Fall eines unteren Versatzes ist im linken Teil der Fig. 1 der Krafterzeuger 30 so gestaltet, dass eine Kraft 32 entgegen der Druckkraft 22 wirkt, für den Fall eines oberen Versatzes im rechten Teil der Fig. 1 erzeugt der Krafterzeuger 30' eine der Zugkraft 22' entgegengesetzte Kraft 32'. Die Anordnung beinhaltet somit einen Krafterzeuger, der eine in den Rotor eingeleitete Kraft erzeugt, welche die bei Erwärmung des Rotors auf das Wälzlager einwirkenden Kraft wenigstens teilweise kompensiert. In dem Zeitraum, in dem die Last auftritt, insbesondere deren Spitzenwert, wirkt die Kraft dauerhaft. Da beim unteren Versatz der Spitzenwert im kalten Zustand der Welle erreicht wird, ist es vorteilhaft, in diesem Zeitraum die Kraft einwirken zu lassen. Beim oberen Versatz wird der Spitzenwert im warmen Zustand der Welle erreicht, so dass im Zeitraum der warmen Welle der Krafterzeuger betrieben wird, um die Kraft zu erzeugen.

Die Wahl des Versatzes hat direkten Einfluss auf die Anordnung und Gestaltung des Krafterzeugers. Dies erläutern die nachfolgenden Beispiele.

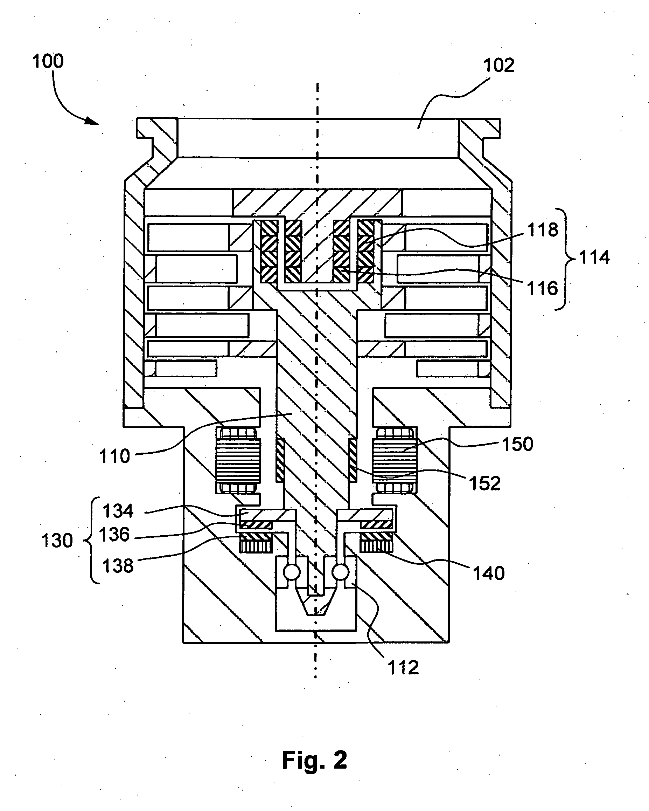

Ein erstes Beispiel zeigt Fig. 2. Eine Vakuumpumpe 100 mit turbomolekularem Pumpabschnitt ist im Schnitt dargestellt. Die Vakuumpumpe weist eine Ansaugöffnung 102 auf. Die pumpaktiven Elemente sind auf einer Welle 110 angeordnet und bilden mit ihr zusammen Bestandteile des Rotors. Das der Ansaugöffnung zugewandte Ende der Welle ist mittels eines auf abstoßender Wirkung beruhenden Permanentmagnetlagers 114 drehbar unterstützt. Das Permanentmagnetlager umfasst einen wellenseitigen Lagerrotor 118 und einen gehäuseseitig angeordneten Lagerstator 116. Ein Wälzlager 112 dient der weiteren Unterstützung der Welle in radialer und axialer Richtung. Auf der Welle ist ein Motormagnet 152 vorgesehen, der mit einer Motorspule 150 zusammenwirkt. Zwischen Motormagnet und Wälzlager ist eine mit der Welle verbundene Scheibe 134 vorgesehen. Diese trägt einen rotorseitigen Permanentmagneten 136, dem ein ortsfester statorseitiger Permanentmagnet 138 gegenübersteht. Zusammen bilden diese einen Krafterzeuger 130, der eine dauerhafte Kraft erzeugt.

Weist die Vakuumpumpe einen unteren Versatz auf, werden die Permanentmagneten 136 und 138 sich abstoßend ausgeführt. Bei einem unteren Versatz ist die Last auf das Wälzlager im kalten Zustand der Welle am größten. Hier ist die permanentmagnetische Krafterzeugung von besonderem Vorteil, da ohne Zufuhr von elektrischer Leistung die Entlastung erreicht wird.

Bei einem oberen Versatz und damit einer Kraft in Richtung Ansaugöffnung sind die Permanentmagneten 136 und 138 sich anziehend ausgeführt.

Es ist vorteilhaft, den Krafterzeuger nahe am Wälzlager anzuordnen, da dann die thermische Ausdehnung der Welle nur einen geringen Einfluss auf den Abstand von rotorseitigem zu statorseitigem Permanentmagneten hat.

Scheibe und rotorseitiger Permanentmagnet können einteilig ausgeführt sein. Alternativ kann die Scheibe einstückig mit der Welle ausgeführt sein.

In einer Weiterbildung ist ein Axialstellglied 140 vorgesehen, welches die Lage des statorseitigen Permanentmagneten 138 parallel zur Achse der Welle verändern kann. Dieses Axialstellglied kann beispielsweise als Spindeltrieb, als Linearstellglied oder mit Hilfe eines Piezoaktuators gestaltet sein. Durch Verschieben der Position des Permanentmagneten wird der Abstand zwischen rotorseitigem und statorseitigem Permanentmagneten und dadurch die Stärke der Kraft geändert. Die Verstellung kann durch den Benutzer der Pumpe oder durch eine Regelelektronik erfolgen. Das Verschieben kann nach Ablauf oder stetig während eines Zeitfensters erfolgen. Dies ist aufgrund des sehr geringen Aufwands kostengünstig herstellbar und damit von Vorteil.

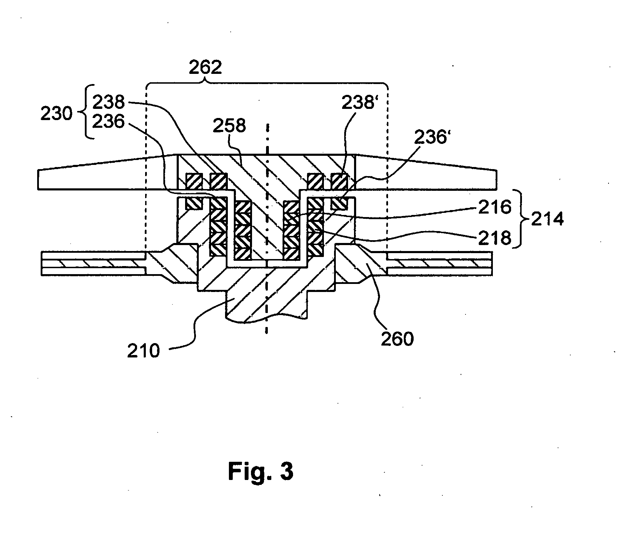

In Fig. 3 ist der Bereich eines im Ansaugbereich angeordneten Permanentmagnetlagers im Schnitt dargestellt. Das Permanentmagnetlager 214 umfasst einen Lagerrotor 218, welcher mit der Welle 210 verbunden ist. Auf dieser sind die pumpaktiven Elemente angeordnet, im Beispiel ist eine Scheibe 260 turbomolekularer Bauart gezeigt. Dem Lagerrotor steht ein Lagerstator 216 gegenüber, welcher von einem Statorträger 258 im Ansaugbereich der Vakuumpumpe gehalten wird. Lagerrotor und Lagerstator sind sich abstoßend ausgeführt und weisen einen oberen Versatz auf. Bei Erwärmung der Welle wird dieser Versatz zunehmen, das Wellenende wächst in Richtung Statorträger. Dieser weist einen Permanentmagneten 238 auf, welcher mit einem Teil des Lagerrotors 236 zusammenwirkt. Beide sind sich abstoßend gestaltet, so dass mit zunehmender Erwärmung und damit Wachsen der Welle die von dem Krafterzeuger 230, der den Permanentmagnet 238 und den Teil des Lagerrotors 236 umfasst, erzeugte Kraft zunimmt.

In einer Weiterbildung umfasst der Krafterzeuger zusätzliche Magnete 238' und 236' an Statorträger und wellenseitig, so dass die Kraft erhöht ist. Es ist vorteilhaft, die Magnete 236, 238, 236' und 238' und gegebenfalls weitere Magnete des Krafterzeugers innerhalb des Scheibennabenbereichs 262 vorzusehen, denn dadurch wird eine negative Beeinflussung der Vakuumleistung der Vakuumpumpe vermieden.

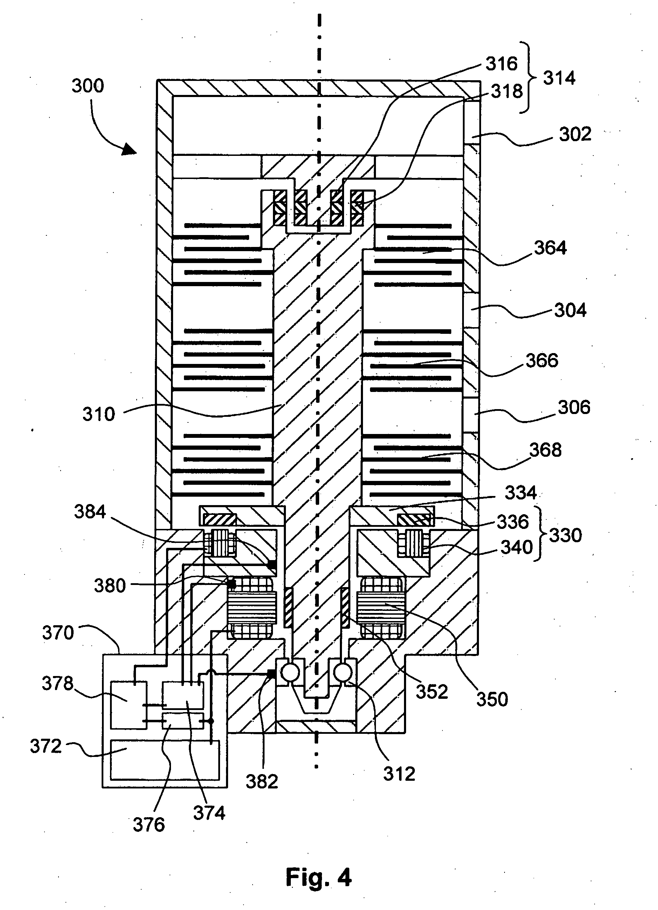

Ein weiteres Ausführungsbeispiel zeigt Fig. 4. Diese zeigt eine so genannte Splitflowpumpe im Schnitt. Die Pumpe 300 weist mehrere Ansaugöffnungen 302, 304 und 306 auf, die jeweils mit nicht gezeigten Kammern in Gasflussverbindung stehen, welche auf verschiedene Druckniveaus gebracht werden. Hierzu weist die Pumpe mehrere Pumpstufe 364, 366 und 368 mit rotor- und statorseitigen pumpaktiven Elementen auf, die die Druckniveaus nach folgenden Prinzip erzeugen: Gas, welches durch Ansaugöffnung 302 in Pumpe gelangt, wird von allen Pumpstufen gefördert. Gas, welches durch die mittlere Ansaugöffnung 304 eintritt, wird von den zwei Pumpstufen 366 und 368 verdichtet. Gas, welches durch die Ansaugöffnung 306 eintritt, wird lediglich durch die Pumpstufe 368 verdichtet. Die Welle 310 trägt die rotierenden Teile der Pumpstufen. Sie wird an dem der hochvakuumseitigen Ansaugöffnung 302 zugeordneten Ende von einem Permanentmagnetlager 314 drehbar unterstützt. Dieses weist einen wellenseitigen Lagerrotor 318 und einen Lagerstator 316 auf, die sich abstoßend gestaltet sind. Nahe dem gegenüberliegenden Ende der Welle ist diese in einem Wälzlager 312 gelagert. Motorspule 350 und Motormagnet 352 wirken zusammen, um bei Bestromung der Spule eine schnelle Drehung der Welle zu erzielen. Die Bestromung erfolgt durch eine in der Antriebselektronik 370 vorgesehene Motorsteuerung 372.

Die Vakuumpumpe weist einen Krafterzeuger 330 auf. Dieser umfasst eine im Gehäuse der Vakuumpumpe gehaltene elektrische Spule 340, welche ein magnetisches Feld erzeugt. Die Spule ist zwischen dem Wälzlager und einer mit dem Rotor verbundenen Scheibe 334 angeordnet. Alternativ kann die Scheibe einstückig mit der Welle ausgeführt sein. Bei einem oberen Versatz muss der Krafterzeuger eine anziehende Kraft auf die Scheibe ausüben. Hierzu reicht es, die Scheibe aus einem ferromagnetischen Material, beispielsweise einer eisenhaltigen Legierung, zu gestalten. Bei einem unteren Versatz muss eine abstoßende Wirkung erzielt werden. In diesem Fall ist auf der Scheibe ein Permanentmagnet 336 vorgesehen, wobei die Polung so gewählt wird, dass sich Spule und Permanentmagnet voneinander abstoßen. Die Bestromung des Spule, und damit die Stärke des Feldes, kann mit einem konstanten Wert erfolgen, der entweder bei Herstellung oder durch den Benutzer festgelegt wird, denn die Betriebstemperatur der Vakuumpumpe kann recht gut bestimmt werden.

Bei häufig wechselnden Betriebsbedingungen, beispielsweise stark veränderlichen Gasmengen, insbesondere starken Temperaturschwankungen, ist es vorteilhaft, eine Stellung des Stromes in Abhängigkeit von Messgrößen vorzunehmen. Hierzu weist die Antriebselektronik eine Kraftstelleinheit 378 auf, welche die Spule 340 bestromt.

Eine erste Einflussgröße, auf deren Grundlage die Bestromung gestellt wird, ist die Leistungsaufnahme der Motorspule. Eine hohe Leistungsaufnahme entsteht bei einer großen in der Vakuumpumpe geförderten Gasmenge. Diese Gasmenge führt unter anderem durch Gasreibung zu einer Rotorerwärmung, welche wiederum eine Längenänderung der Welle verursacht. Da von dieser die einzuleitende Kraft abhängt, kann aus der Leistungsaufnahme auf die notwendige Bestromung geschlossen werden. Daher weist die Antriebselektronik eine Leistungserkennungseinheit 376 auf, welche mit der Kraftstelleinheit in Kontakt steht.

Alternativ oder zusätzlich zur Erhöhung der Genauigkeit kann eine Auswerteeinheit 374 vorgesehen sein, die von einem oder mehreren Sensoren wenigstens ein Signal aufnimmt. Sie steht mit der Kraftstelleinheit in Verbindung und stellt das Signal in geeigneter Form zur Verfügung, so dass die Kraftstelleinheit die Bestromung der Spule 340 passend einstellen kann. Verschiedene Sensoren sind denkbar, beispielsweise ein Temperaturmessfühler 382, der die Lagertemperatur misst, ein Temperaturmessfühler 380, der die Motortemperatur misst, oder ein Messfühler 384, der ein der Rotortemperatur entsprechendes Signal aufnimmt. Dies kann beispielsweise eine optische Messung im Infrarotbereich sein.

Die Vakuumpumpe wird also nach einem Verfahren betrieben, bei dem eine Betriebsgröße der Vakuumpumpe bestimmt und abhängig von dieser Betriebsgröße mit einem Krafterzeuger eine Kraft in den Rotor eingeleitet wird. Diese Betriebsgröße kann eine Temperatur, beispielsweise die vorgenannten Lager-, Rotor- oder Motortemperatur, sein. Alternativ kann die Betriebsgröße wie vorgenannt die vom Antrieb aufgenommene elektrische Leistung sein. Die

Bestimmung kann laufend oder aufgrund des langsamen
Temperaturänderungsverhaltens der Welle in längeren zeitlichen Abständen mit geringer Abtastrate erfolgen. In einer Abwandlung kann eine Mehrzahl von Betriebsgrößen bestimmt werden, um davon abhängig mittels des Krafterzeugers eine Kraft in den Rotor einzuleiten.

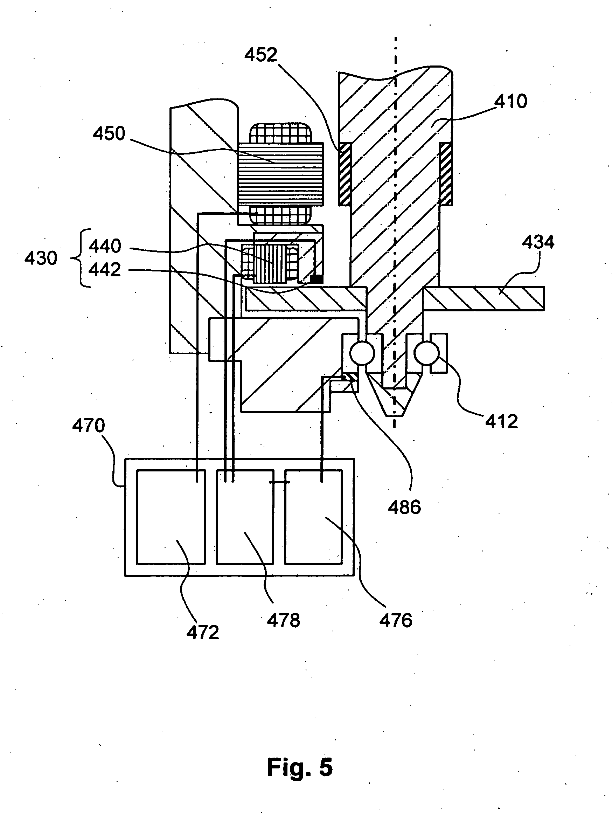

Ein Ausführungsbeispiel, welches insbesondere für einen unteren Versatz geeignet ist, zeigt Fig. 5 im Schnitt. Das Permanentmagnetlager ist hier nicht gezeigt, enstpricht jedoch denen aus der vorhergehenden Beispielen und besitzt einen unteren Versatz. Es wirkt daher eine Druckkraft auf das Wälzlager 412, die Kraft ist in der Abbildung nach unten gerichtet. Auf der Welle 410 ist zwischen dem Motormagneten 452 und dem Wälzlager 412 eine Scheibe 434 angeordnet. Vorteilhaft ist es, die Scheibe nahe dem Wälzlager anzuordnen, da so die Ausdehung der Welle bei Erwärmung geringen Einfluss auf die Wirkung des Krafterzeugers hat. Der Krafterzeuger 430 umfasst eine elektrische Spule 440, die bei Bestromung eine anziehende Kraft auf die Scheibe ausübt und dadurch die Druckkraft auf das Wälzlager verringert.

Eine Antriebselektronik 470 beinhaltet eine Motorsteuerung 472, die die Bestromung der Motorspule 450 bewirkt. Die Antriebselektronik umfasst außerdem eine Kraftstelleinheit 478, die die Bestromung der elektrischen Spule 440 vornimmt. Ein Abstandssensor 442, beispielsweise ein induktiver Messfühler, ist zur Bestimmung des Abstandes zwischen Scheibe und elektrischer Spule vorgesehen. Auf Grundlage dieses Wertes wird die Bestromung gestellt.

Zusätzlich oder ersatzweise ist ein Kraftsensor 486 vorgesehen, der so angeordnet ist, dass sein Ausgangssignal ein Maß für die auf das Wälzlager einwirkende Druckkraft ist. Er ist mit einer in der Antriebselektronik vorgesehenen Auswerteeinheit 476 verbunden, welche das Ausgangssignal aufbereitet und der Kraftstelleinheit als Eingangsgröße für die Bestromung zur Verfügung stellt. Dieser Kraftsensor ist vorteilhaft, da direkt die auf das Wälzlager einwirkende Kraft Eingangsgröße bei der Bemessung der Kraft ist.

Da die thermische Ausdehnung einen zeitlich langsamen Verlauf besitzt, sind die Anforderungen an den Abstandssensor und die Elektroniken gering, beispielsweise in Bezug auf Abtastraten und Verarbeitungsgeschwindigkeiten, so dass diese Lösung kostengünstig umgesetzt werden kann.

Für einen oberen Versatz ist die Anordnung leicht zu modifizieren, indem ein Permanentmagnet auf der Scheibe vorgesehen wird, so dass eine Abstoßung bewirkt werden kann. Eine andere Anpassung besteht darin, die elektrische Spule 440 auf der gleichen Seite der Scheibe 434 wie das Wälzlager 412 anzuordnen, so dass der Krafterzeuger eine Zugkraft in Richtung Wälzlager bewirkt.

Dieses Beispiel lässt sich noch weiterbilden, in dem oberhalb und unterhalb der Scheibe je eine elektrische Spule vorgesehen ist, so dass die Vakuumpumpe dann je nach Anforderung auf unteren oder oberen Versatz eingestellt werden kann.

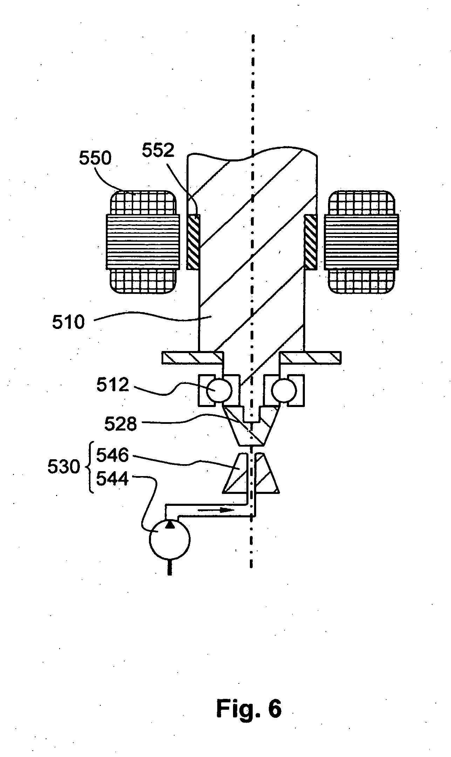

Ein weiteres Ausführungsbeispiel des Krafterzeugers zeigt Fig. 6 in einer schematischen und geschnittenen Darstellung des Bereichs des Motors und des Wälzlagers. Die Grundidee dieses Beispiels ist die Kraft hydraulisch zu erzeugen. Das Wälzlager 512 ist nahe einem Ende der Welle 510 angeordnet. Eine im wesentlichen konisch gestaltete Mutter 528 ist unmittelbar dem Wälzlager zugeordnet, wobei der Durchmesser der Mutter zum Wälzlager hin zunimmt, so dass bei schneller Drehung der Welle Schmiermittel auf der Oberfläche der Mutter durch Fliehkraftwirkung in das Wälzlager hinein gefördert wird. Der Krafterzeuger 530 umfasst eine Hydraulikpumpe 544, welcher Schmiermittel unter Druck setzt, welches anschließend aus der Düse 546 gegen die Mutter 528 gedrückt wird. Der Druck des Schmiermittels ist dabei so bemessen, dass es eine das Wälzlager entlastende Kraft erzeugt. Vorteilhaft werden Sensoren, wie sie bei den vorgenannten Beispielen beschrieben wurden, benutzt, um die Hydraulikpumpe und damit den Druck des Schmiermittels einzustellen.

Diese Anordnung ist besonders gut geeignet, einer auf das Wälzlager wirkenden Druckkraft entgegenzuwirken, d.h. einer Kraft, die aus Richtung von Motorspule 550 und Motormagnet 552 auf das Wälzlager wirkt.

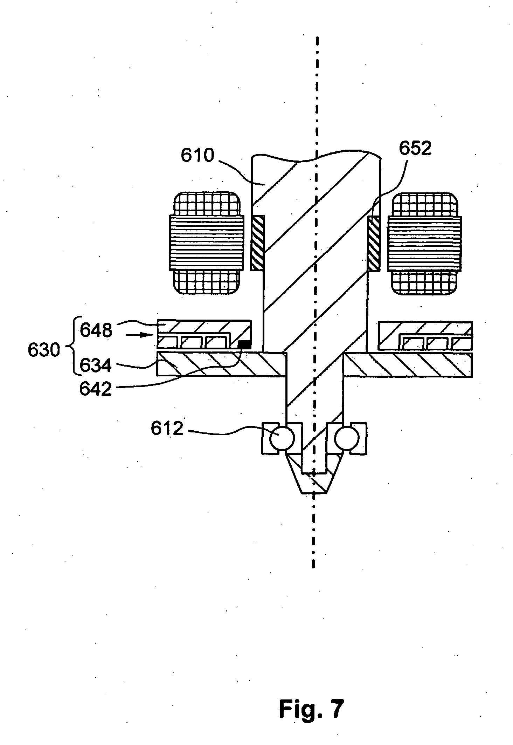

Das Ausführungsbeispiel gemäß Fig. 7 stellt eine Lösung mit einem aerostatischen Krafterzeuger 630 vor. Zwischen Motormagnet 652 und Wälzlager 612 ist eine Scheibe 634 auf der Welle 610 angeordnet. Ein Düsenblock 648 ist so angeordnet, dass Gas gegen die Scheibe geblasen wird, wodurch eine Kraft auf die Scheibe und damit die Welle entsteht. Gezeichnet ist eine Ausführungsform, nach der eine Kraft in Richtung auf das Wälzlager entsteht, so dass hiermit ein oberer Versatz gehandhabt werden kann. Für einen unteren Versatz wird der Düsenblock auf der gleichen Seite der Scheibe wie das Wälzlager angeordnet. Auch hier ist es denkbar, auf jeder Seite der Scheibe einen Düsenblock vorzusehen um sowohl unteren als auch oberen Versatz nutzen können. Vorteilhaft ist an dieser Lösung, dass aus dem Düsenblock ein reaktionsträges Sperrgas ausgeblasen werden kann, welches sowohl das Wälzlager als auch Motorspulen und Motormagnet vor korrosiven Gasen aus dem Pumpbereich schützt. Ein Abstandssensor 642 dient dazu, den Abstand zwischen Scheibe und Düsenblock zu überwachen und aufgrund dieses Wertes den Gasstrom und -druck durch den Düsenblock einzustellen.

Der Düsenblock enthält wenigstens eine, zur besseren Kraftverteilung jedoch eine Mehrzahl von Düsen. Er kann einstückig mit dem Gehäuse der Vakuumpumpe ausgeführt sein.

Die anhand der verschiedenen Ausführungsbeispiele vorgestellten Maßnahmen sind untereinander kombinierbar in Bezug auf vorgesehene Sensoren als Eingangsgrößen für die Stellung der Kraft.

## Patentansprüche

1. Vakuumpumpe mit einem Rotor und einer Welle (10; 110; 210; 310; 410; 510; 610), einem Wälzlager (12; 112; 212; 312; 412; 512; 612), welches dazu angeordnet ist, die Welle unter normalen Betriebsbedingungen zu unterstützen, und einem von dem Wälzlager beabstandeten Permanentmagnetlager (14; 114; 214; 314), welches einen Lagerstator (16; 116; 216; 316) und einen an der Welle angeordneten Lagerrotor (18; 118; 218; 318) umfasst, **dadurch gekennzeichnet, dass** sie einen Axialkrafterzeuger (30, 30'; 130; 230; 330; 430; 530; 630) beinhaltet, der eine in die Welle eingeleitete Kraft erzeugt.

2. Vakuumpumpe nach Anspruch 1, **dadurch gekennzeichnet, dass** der Krafterzeuger (30, 30'; 130; 230; 330; 430; 530; 630) einen rotorseitigen Permanentmagneten (136; 236,236') und einen statorseitigen Permanentmagneten (138; 238,238') umfasst.

3. Vakuumpumpe nach Anspruch 1, **dadurch gekennzeichnet, dass** eine Kraftstelleinheit (378; 478) vorgesehen ist, die die Größe der erzeugten Kraft einstellt.

4. Vakuumpumpe nach Anspruch 2 oder 3, **dadurch gekennzeichnet, dass** der statorseitige Permanentmagnet (138) in einer Axialverstellung (140) gehalten ist.

5. Vakuumpumpe nach Anspruch 3, **dadurch gekennzeichnet, dass** der Krafterzeuger (330; 430) eine elektrische Spule (340; 440) umfasst.

6. Vakuumpumpe nach Anspruch 3, **dadurch gekennzeichnet, dass** ein hydraulisches Medium vorgesehen ist, mit welchem der Krafterzeuger (530) die Kraft in den Rotor einleitet.

7. Vakuumpumpe nach Anspruch 3, **dadurch gekennzeichnet, dass** der Krafterzeuger (630) einen Düsenblock (648) umfasst.

8. Vakuumpumpe nach einem der Ansprüche 1 bis 7, **dadurch gekennzeichnet, dass** eine Leistungserfassungseinheit (374) vorgesehen ist, die die Leistungsaufnahme eines Antriebes erfasst.

9. Vakuumpumpe nach einem der vorhergehenden Ansprüche, **dadurch gekennzeichnet, dass** sie wenigstens zwei Pumpstufen (364, 366, 368) umfasst, denen jeweils ein Sauganschluss (302, 304, 306) zugeordnet ist.

10. Verfahren zum Betrieb einer Vakuumpumpe nach Anspruch 1, wobei eine Betriebsgröße der Vakuumpumpe bestimmt und abhängig von der Betriebsgröße mit einem Krafterzeuger eine Kraft in einen Rotor eingeleitet wird, **dadurch gekennzeichnet, dass** die Kraft wenigstens teilweise die im Permanentmagnetlager entstehende Druckkraft oder Zugkraft kompensiert.

11. Verfahren nach Anspruch 10, **dadurch gekennzeichnet, dass** die Betriebsgröße eine Temperatur ist.

12. Verfahren nach Anspruch 10, **dadurch gekennzeichnet, dass** die Betriebsgröße die von einem Antrieb aufgenommene elektrische Leistung ist.

## Claims

1. Vacuum pump having a rotor and a shaft (10; 110; 210; 310; 410; 510; 610), a roller bearing (12; 112; 212; 312; 412; 512; 612) which is arranged so as to support the shaft under normal operating conditions, and a permanent magnetic bearing (14; 114; 214; 314) spaced apart from the roller bearing, which permanent magnetic bearing comprises a bearing stator (16; 116; 216; 316) and a bearing rotor (18, 118; 218; 318) arranged on the shaft, **characterised in that** the vacuum pump contains an axial actuator (30, 30'; 130; 230; 330; 430; 530; 630) which generates a force introduced into the shaft.

2. Vacuum pump according to claim 1, **characterised in that** the actuator (30, 30'; 130; 230; 330; 430; 530; 630) comprises a rotor-side permanent magnet (136, 236, 236') and a stator-side permanent magnet (138; 238, 238').

3. Vacuum pump according to claim 1, **characterised in that** a force adjustment unit (378; 478) is provided which adjusts the magnitude of the force generated.

4. Vacuum pump according to either claim 2 or claim 3, **characterised in that** the stator-side permanent magnet (138) is held in an axial displacement (140).

5. Vacuum pump according to claim 3, **characterised in that** the actuator (330; 430) comprises an electric coil (340; 440).

6. Vacuum pump according to claim 3, **characterised in that** a hydraulic medium is provided, by means of which the actuator (530) introduces the force into the rotor.

7. Vacuum pump according to claim 3, **characterised in that** the actuator (630) comprises a nozzle block (648).

8. Vacuum pump according to any of claims 1 to 7, **characterised in that** a power detection unit (374) is provided which detects the power consumption of a drive.

9. Vacuum pump according to any of the preceding claims, **characterised in that** it comprises at least two pumping stages (364, 366, 368), which are associated with a suction connection (302, 304, 306).

10. Method for operation of a vacuum pump according to claim 1, a parameter of the vacuum pump being determined and, depending on the parameter, a force being introduced into a rotor by means of an actuator, **characterised in that** the force at least partially compensates for the repelling force or pull force arising in the permanent magnetic bearing.

11. Method according to claim 10, **characterised in that** the parameter is a temperature.

12. Method according to claim 10, **characterised in that** the parameter is the electric power recorded from a drive.

## Revendications

1. Pompe à vide pourvue d'un rotor et d'un arbre (10 ; 110 ; 210 ; 310 ; 410 ; 510 ; 610), d'un palier de roulement (12 ; 112 ; 212 ; 312 ; 412 ; 512 ; 612) qui est disposé de manière à soutenir l'arbre dans des conditions de fonctionnement normales, et d'un palier à aimant permanent (14 ; 114 ; 214 ; 314) disposé à distance du palier de roulement, lequel comprend un stator de palier (16 ; 116 ; 216 ; 316) et un rotor de palier (18 ; 118 ; 218 ; 318) disposé sur l'arbre, **caractérisée en ce qu'**elle comporte un générateur de force axiale (30, 30' ; 130 ; 230 ; 330 ; 430 ; 530 ; 630) qui génère une force envoyée dans l'arbre.

2. Pompe à vide selon la revendication 1, **caractérisée en ce que** le générateur de force (30, 30' ; 130 ; 230 ; 330 ; 430 ; 530 ; 630) comprend un aimant permanent côté rotor (136 236, 236') et un aimant permanent côté stator (138 ; 238, 238').

3. Pompe à vide selon la revendication 1, **caractérisée en ce qu'**il existe une unité de réglage de force (378 ; 478) qui règle l'ampleur de la force générée.

4. Pompe à vide selon la revendication 2 ou 3, **caractérisée en ce que** l'aimant permanent côté stator (138) est maintenu dans un ajustage axial (140).

5. Pompe à vide selon la revendication 3, **caractérisée en ce que** le générateur de force (330 ; 430) comprend une bobine électrique (340 ; 440).

6. Pompe à vide selon la revendication 3, **caractérisée en ce qu'**il existe un fluide hydraulique avec lequel le générateur de force (530) envoie la force dans le rotor.

7. Pompe à vide selon la revendication 3, **caractérisée en ce que** le générateur de force (630) comprend un bloc de buses (648).

8. Pompe à vide selon l'une des revendications 1 à 7, **caractérisée en ce qu'**il existe une unité d'acquisition de puissance (374) qui acquiert la puissance absorbée par un mécanisme d'entraînement.

9. Pompe à vide selon l'une des revendications précédentes, **caractérisée en ce qu'**elle comprend au moins deux étages de pompe (364, 366, 368) auxquels est respectivement associé un raccord d'aspiration (302, 304, 306).

10. Procédé pour faire fonctionner une pompe à vide selon la revendication 1, selon lequel une grandeur opérationnelle de la pompe à vide est déterminée et une force est envoyée dans un rotor avec un générateur de force en fonction de la grandeur opérationnelle, **caractérisé en ce que** la force compense au moins partiellement la force de pression ou la force de traction produite dans le palier à aimant permanent.

11. Procédé selon la revendication 10, **caractérisé en ce que** la grandeur opérationnelle est une température.

12. Procédé selon la revendication 10, **caractérisé en ce que** la grandeur opérationnelle est la puissance électrique absorbée par un mécanisme d'entraînement.
